# EUROPEAN PATENT APPLICATION

(11) **EP 4 618 557 A1**
(43) Date of publication of application: **17.09.2025**
(21) Application number: 24795477.9
(22) Date of filing: 24.01.2024
(51) Int. Cl.: H04N 21/41, H04N 21/436, G06F 3/14

(54) **METHOD AND DEVICE FOR SCREEN PROJECTION**

(30) Priority: 28.04.2023 CN 202310491453
(71) Applicant: Huawei Technologies Co., Ltd., Shenzhen, Guangdong 518129 (CN)
(72) Inventor: LIU, Luohai, Shenzhen, Guangdong 518129 (CN); LIU, Feng, Shenzhen, Guangdong 518129 (CN); WU, Haoran, Shenzhen, Guangdong 518129 (CN); ZHANG, Yingying, Shenzhen, Guangdong 518129 (CN)
(74) Representative: MERH-IP Matias Erny Reichl Hoffmann Patentanwälte PartG mbB
(86) International application number: PCT/CN2024/073847
(87) International publication number: WO 2024/222088

(57) **Abstract**

This application provides a projection method and a device, and relates to the field of terminal technologies. A source device and a projection device (a destination device) negotiate projection information, to improve resolution and operability of projection. The method includes: determining a first player that needs to be used by a first device when a second device initiates video projection; receiving a playing instruction sent by the second device; and playing a projected video by using the first player according to the playing instruction. The playing instruction is sent as triggered by an operation performed on a projection control of a second player of the second device, and the playing instruction instructs the first device to play the projected video by using the first player. The first player is a player that is supported by the first device and that is used in conjunction with the second player.

## Description

This application claims priority to Chinese Patent Application No. 202310491453.8, filed with the China National Intellectual Property Administration on April 28, 2023 and entitled "PROJECTION METHOD AND DEVICE", which is incorporated herein by reference in its entirety.

### TECHNICAL FIELD

This application relates to the field of communication technologies, and in particular, to a projection method and a device.

### BACKGROUND

Currently, a projection function has been widely used in daily life of a user. For example, the user may install projection software on a mobile phone, to project content on the mobile phone (namely, a source device) to another destination device (for example, a television) that supports a projection function for display.

In some solutions, a device may perform projection according to a Digital Living Network Alliance (digital living network alliance, DLNA) protocol. For example, a mobile phone projects content to a large screen (for example, a television). A video content manufacturer provides an application, and the application may be installed on the mobile phone. After a user selects, by using the application on the mobile phone, a video that needs to be projected, the mobile phone may interact with the television according to the DLNA protocol, so that the television can obtain a video resource from a server and play the video.

Because most video content manufacturers limit projection resolution of video resources that can be used for projection, a high-definition projection function provided by the video content manufacturer is generally open only to a player of the video content manufacturer. This means that the player of the video content manufacturer needs to be pre-installed and started on a television to achieve projection experience of a high-definition video.

### SUMMARY

This application provides a projection method and a device, to dynamically adjust, based on a quantity of source devices, a parameter of display data projected to a destination device, to improve display smoothness and use experience of a user during projection.

To achieve the foregoing objective, this application uses the following technical solutions.

According to a first aspect, this application provides a projection method, applied to a first device or a component (for example, a chip system) that supports a function of the first device. The method includes: determining a first player that needs to be used by the first device when a second device initiates video projection; receiving a playing instruction sent by the second device; and playing a projected video by using the first player according to the playing instruction. The playing instruction is sent as triggered by an operation performed on a projection control of a second player of the second device, and the playing instruction instructs the first device to play the projected video by using the first player. The first player is a player that is supported by the first device and that is used in conjunction with the second player.

That the player of the first device is used in conjunction with the player of the second device means that the player of the first device and the player of the second device support a same projection data transmission protocol. Optionally, the player of the first device and the player of the second device belong to a same manufacturer or different manufacturers.

For example, the first device is a television, and the second device is a mobile phone. The mobile phone and the television can determine, through negotiation, a television player (for example, the first player) that is supported by the television and that is used in conjunction with a mobile phone player (for example, the second player). In this way, after receiving the playing instruction, the television can automatically start the television player according to the playing instruction, and play the projected video by using the television player. Because the television player is determined through automatic negotiation, and can be used in conjunction with the mobile phone player, the television player can provide projection experience like a high definition, a variable speed, and a bullet comment. In addition, in a projection process, a user does not need to manually start, in advance, the television player that is of the television and that is used in conjunction with the mobile phone player. This can reduce user operation complexity, and improve ease of use of a projection function.

In a possible design, the playing instruction includes at least one piece of the following information: source information of the projected video, network connection information of the second device, a download address of the first player, an identifier of the first player, and an identifier of the second player.

In this way, after receiving the playing instruction, the television can automatically start the television player based on one or more pieces of information carried in the playing instruction, and play the projected video by using the television player.

The information carried in the playing instruction is not limited to the foregoing several types of information. Other possible information may also be carried in the playing instruction, to indicate the first device to play the projected video by using the first player. For example, the playing instruction includes information A. After receiving the playing instruction, the first device may determine, based on the information A, the first player that needs to be used by the first device for projection.

In a possible design, playing the projected video by using the first player includes:
if the first player is installed on the first device, starting the first player, and playing the projected video by using the first player.

In this way, when the first player has been installed on the first device, the first device can automatically start the first player according to the playing instruction, and play the projected video. The user does not need to manually start the first player of the first device. This can reduce the user operation complexity, and improve human-computer interaction efficiency.

In a possible design, playing the projected video by using the first player includes:
if the first player is not installed on the first device, downloading and installing the first player based on the download address of the first player; and
starting the first player, and playing the projected video by using the first player.

In this way, even if the first player is not installed on the first device, the first device can automatically download and install the first player according to the playing instruction after receiving the playing instruction, and play the projected video by using the first player. This improves a projection success probability, simplifies an operation for the user during projection, and improves ease of use of a projection solution.

In a possible design, the method further includes:
establishing a communication connection to the second device according to the playing instruction; and
receiving, through the communication connection, projection control data sent by the second device, where the projection control data includes at least one type of the following data: bullet comment data, variable speed data, and definition data.

In this way, an interaction channel between different device-side applications of a video content manufacturer can be connected through the communication connection. For example, an interaction channel between the mobile phone player (for example, the second player) and the television player (for example, the first player) that is of the same manufacturer as the mobile phone player and that is used in conjunction with the mobile phone player can be connected. In this way, the smart television can provide the user with higher-definition projection viewing experience and more interesting projection interaction manners such as the bullet comment and the variable speed by using the television player that is used in conjunction with the mobile phone player, to easily implement playing control.

In addition, in the method, the communication connection between the first player and the matched second player can also be implemented without requiring the first device to start, in advance, the first player that is used in conjunction with the second player of the second device, to implement playing control. It can be learned that according to the method, the second device can control playing of the first device while the user operation complexity is reduced, thereby improving projection experience.

In a possible design, the playing instruction does not include the network connection information of the second device. In this case, the first device may initiate a search procedure, and obtain the network connection information of the second device by using the search procedure, to establish the communication connection to the second device.

In this way, the first device can establish the communication connection to the second device in a plurality of manners, to improve a connection success probability. In this way, corresponding projection control data can be transmitted through the communication connection, and more abundant projection functions are provided.

In a possible design, determining the first player that needs to be used by the first device when the second device initiates video projection includes:
sending a discovery packet. The discovery packet includes information about a player supported by the first device, and the information about the player supported by the first device is used as an input for the second device to determine the first player.

In other words, the second device may determine, based on the information about the player supported by the first device, the first player that is supported by the second device and that is used in conjunction with the second player of the second device.

In a possible design, that the information about the player supported by the first device is used as the input for the second device to determine the first player includes:
receiving an inquiry message sent by the second device, where the inquiry message is used to inquire the player that is supported by the first device and that is used in conjunction with the second player;
determining the first player based on the inquiry message; and
sending a response message, where the response message includes information about the first player.

In other words, the first device may determine, through negotiation between the first device and the second device, the first player that is supported by the second device and that is used in conjunction with the second player of the second device. Subsequently, after receiving the playing instruction, the first device can automatically start, according to the playing instruction, the first player determined through negotiation, and play the projected video by using the first player, thereby improving the projection experience.

In a possible design, the information about the player includes at least one piece of the following information: an identifier of the player, a content manufacturer corresponding to the player, and a function supported by the player.

The function supported by the player includes at least one of the following functions: the high definition, the variable speed, and the bullet comment.

In this way, the first device and the second device can exchange the information about the first player by using a negotiation procedure, to trigger the first device to automatically start and play the projected video by using the first player.

In a possible design, the source information of the projected video includes at least one piece of the following information: a playing address of the projected video and a provider of the projected video; and/or
the network connection information of the second device includes at least one piece of the following information: an address of the second player of the second device and a port number of the second player.

In a possible design, the first player of the first device establishes the communication connection to the second player of the second device according to the playing instruction.

In this way, the first device may establish the communication connection to the second player based on information like the address of the second player of the second device and the port number of the second player, to encrypt data transmission, release a definition limitation, and improve a playing control capability.

In a possible design, the playing instruction further includes membership information and/or bullet comment information of the first player.

In this way, for example, the first device may determine, based on the membership information, a playing policy like providing projection experience without an advertisement.

In a possible design, the playing instruction includes a first field, and the first field indicates the at least one piece of the following information: the source information of the projected video, the network connection information of the second device, the download address of the first player, the identifier of the first player, and the identifier of the second player.

Optionally, the first field may be a newly added field or a reserved field in the playing instruction.

Optionally, there may be one or more first fields. For example, one field indicates the plurality of pieces of information, or each of a plurality of fields indicates different information.

In this way, after receiving the playing instruction, the first device may parse a corresponding field carried in the playing instruction, and automatically start and play the projected video by using the first player and based on an indication of the corresponding field, thereby improving the projection experience.

In a possible design, the discovery packet includes a broadcast packet, and the discovery packet includes a simple device discovery protocol SSDP packet.

In this way, the first device can broadcast, by using the broadcast packet, the information about the player supported by the first device to a peripheral device, so that the peripheral device can learn the information about the player supported by the first device. The peripheral device can send a playing instruction to the first device based on the information, to trigger the first device to automatically start a corresponding player supported by the first device and play the projected video.

In a possible design, the playing instruction includes a simple object access protocol SOAP-based instruction, and/or the communication connection includes a transmission control protocol TCP connection.

Optionally, the communication connection established between the first device and the second device may be a proprietary protocol-based communication connection. A proprietary protocol may be a projection data transmission protocol customized according to a standard of the content manufacturer of the projected video. In this way, the communication connection between the first player and the second player of the content manufacturer is established according to the proprietary protocol of the content manufacturer, to encrypt data transmission, release the definition limitation, and improve the playing control capability. This provides more abundant projection operations.

According to a second aspect, a projection method is provided, applied to a second device or a component (for example, a chip system) that supports a function of the second device. The method includes:
determining a first player that needs to be used by a first device when the second device initiates video projection, where the first player is a player that is supported by the first device and that is used in conjunction with a second player;
receiving a projection operation performed on the second player; and
sending a playing instruction, where the playing instruction instructs the first device to play a projected video by using the first player.

In comparison with a related technology in which the first device starts a default player during projection, in the method of this application, in a projection discovery phase, the first device negotiates with the second device, to determine the first player that is supported by the first device and that is used in conjunction with the second player of the second device. In this way, after receiving the playing instruction, the first device can automatically start, according to the playing instruction, the first player determined through negotiation. Because the first player started by the first device and the second player are used together, the first device can provide projection experience with rich functions such as a high definition by using the first player. In addition, the first device does not need to install and start the first player in advance, so that a user operation can be simplified, and projection efficiency can be improved.

In a possible design, before sending the playing instruction, the method further includes:
displaying a first interface, where the first interface includes a first projection control of the first player.

Sending the playing instruction includes:
sending the playing instruction in response to an operation performed on the first projection control.

After determining, through negotiation, the first player that is supported by the first device and that is used in conjunction with the second player of the second device, the second device (for example, a mobile phone) may prompt a user to operate a projection control of the first player by displaying the projection control, to trigger the first device to automatically start the first player.

In a possible design, the first interface further includes a second projection control of a third player. The third player is a player not supported by the first device, and/or the third player is not a player that is used in conjunction with the second player.

User interface UI effect of the first projection control is different from UI effect of the second projection control.

In this way, the projection control of the player supported by the first device is presented to the user in a prominent UI style, and the user can be prompted to tap to select the player supported by the first device, to trigger the first device to automatically start the player supported by the first device for playing.

In a possible design, the method further includes:
sending projection control data through a communication connection to the first device. The projection control data includes at least one type of the following data: bullet comment data, variable speed data, and definition data.

In this way, the projection data can be transmitted through the communication connection, to implement playing control synchronization. In other words, the second device can perform playing control on a projection process of the first device through the communication connection.

In a possible design, determining the first player that needs to be used by the first device when the second device initiates video projection includes:
receiving a discovery packet sent by the first device, where the discovery packet includes information about a player supported by the first device; and
determining, from players supported by the first device, the player that is used in conjunction with the second player as the first player.

In a possible design, determining the first player that needs to be used by the first device when the second device initiates video projection includes:
sending an inquiry message, where the inquiry message is used to inquire the player that is supported by the first device and that is used in conjunction with the second player; and
receiving a response message sent by the first device, where the response message indicates the first player.

In a possible design, the playing instruction includes at least one piece of the following information: source information of the projected video, network connection information of the second device, a download address of the first player, an identifier of the first player, and an identifier of the second player.

In a possible design, the source information of the projected video includes at least one piece of the following information: a source type of the projected video, a playing address of the projected video, and a provider of the projected video.

In a possible design, the network connection information of the second device includes at least one piece of the following information: an address of the second player of the second device and a port number of the second player.

In a possible design, the discovery packet includes a broadcast packet, and the discovery packet includes a simple device discovery protocol SSDP packet.

In a possible design, the playing instruction includes a simple object access protocol SOAP-based instruction, and/or the communication connection includes a transmission control protocol TCP connection.

According to a third aspect, a device is provided. The device is a destination device during projection, and the destination device includes a display, one or more processors, one or more memories, and one or more programs. The processor is coupled to both the display and the memory, and the one or more programs are stored in the memory. When the destination device runs, the processor executes the one or more programs stored in the memory, to enable the destination device to perform the projection method according to any one of the first aspect and the possible implementations of the first aspect.

According to a fourth aspect, a device is provided. The device is a source device during projection, and the source device includes a display, one or more processors, one or more memories, and one or more programs. The processor is coupled to both the display and the memory, and the one or more programs are stored in the memory. When the source device runs, the processor executes the one or more programs stored in the memory, to enable the source device to perform the projection method according to any one of the second aspect and the possible implementations of the second aspect.

According to a fifth aspect, a device is provided. The device has a function of implementing the method according to any one of the foregoing aspects and the possible implementations of the foregoing aspects. The function may be implemented by hardware, or may be implemented by hardware executing corresponding software. The hardware or the software includes one or more modules corresponding to the function.

According to a sixth aspect, a readable storage medium is provided, including instructions. When the instructions are run on a device, the device is enabled to perform the projection method according to any one of the first aspect and the second aspect and the possible implementations of the first aspect and the second aspect.

According to a seventh aspect, a program product is provided. When the program product runs on a device, the device is enabled to perform the projection method according to any one of the first aspect and the second aspect and the possible implementations of the first aspect and the second aspect.

According to an eighth aspect, a chip system is provided, including at least one processor and at least one interface circuit. The at least one interface circuit is configured to: perform a transceiver function, and send instructions to the at least one processor. When the at least one processor executes the instructions, the at least one processor performs the method according to any one of aspects or implementations of the aspects.

According to a ninth aspect, a system is provided, including the first device and the second device according to any one of the foregoing aspects or the implementations of the foregoing aspects.

### BRIEF DESCRIPTION OF DRAWINGS

FIG. 1A and FIG. 1B are diagrams of examples of projection methods according to an embodiment of this application;
FIG. 1C(a) to FIG. 1D(b) are diagrams of scenarios of a projection method according to an embodiment of this application;
FIG. 2A is a diagram of an architecture of a projection system according to an embodiment of this application;
FIG. 2B is a diagram of a structure of a device/apparatus according to an embodiment of this application;
FIG. 3 is an interaction diagram of a projection method according to an embodiment of this application;
FIG. 4 is a diagram of a structure of a device/apparatus according to an embodiment of this application;
FIG. 5 is a diagram of a scenario of a projection method according to an embodiment of this application;
FIG. 6 is a diagram of an interface of a projection method according to an embodiment of this application;
FIG. 7(a) to FIG. 8(b) are diagrams of scenarios of a projection method according to an embodiment of this application;
FIG. 9 is an interaction diagram of a projection method according to an embodiment of this application;
FIG. 10(a) and FIG. 10(b) are a diagram of a scenario of a projection method according to an embodiment of this application;
FIG. 11 is an interaction diagram of a projection method according to an embodiment of this application;
FIG. 12 is a diagram of a structure of an apparatus according to an embodiment of this application; and
FIG. 13 is a diagram of a structure of a chip system according to an embodiment of this application.

### DESCRIPTION OF EMBODIMENTS

First, related technical terms used in embodiments of this application are described.

### 1. Simple device discovery protocol (simple service discovery protocol, SSDP)

A DLNA-based projection process includes a device discovery process and a device connection process. In the SSDP, as a protocol that can be used in the device discovery process, a device A can notify a peripheral device of an online state of the device A by sending a notify (notify) broadcast packet. In the SSDP, after receiving the notification broadcast packet, the peripheral device queries a device description document (device description document, DDD) from the device A, to obtain a name of the device A and a control instruction supported by the device A. In this way, the peripheral device may discover the device A, and establish a connection to the device A.

### 2. Simple object access protocol (simple object access protocol, SOAP)

After a device is discovered, connections can be established between devices. For example, in a projection scenario, a mobile phone discovers a television. Then, in response to a projection operation performed by a user on the mobile phone, the mobile phone may send a SOAP-based playing instruction to the television, to instruct the television to play a projected video. In this way, the user can project the video in the mobile phone to the television for playing.

Currently, the following related technologies are provided in the industry to implement projection.

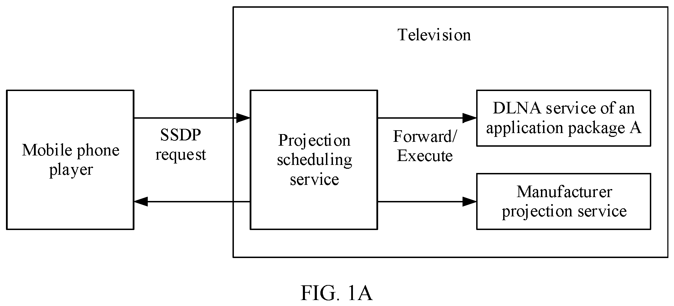

Related technology 1: As shown in FIG. 1A, a projection system includes a mobile phone and a television. A player is installed on the mobile phone. The television includes a projection scheduling service, a third-party application projection service (for example, a DLNA service of an application package A), and a manufacturer projection service.

The player of the mobile phone adds a prefer parameter to a tail of an SSDP request packet sent to the television. The parameter specifies a receiver of the SSDP request packet. After receiving the SSDP request packet, the projection scheduling service of the television determines whether the application package A indicated by the prefer parameter exists locally. If the application package A indicated by the prefer parameter exists locally, the SSDP request packet is sent to the DLNA service of the application package A for processing. If the application package A does not exist locally, the SSDP request packet is transferred to a default DLNA service of the system for processing.

In this method, projection can be implemented only when a DLNA service of a third-party application (for example, the DLNA service of the application package A) is installed in advance and is in a started state. Generally, the user needs to manually install and start the DLNA service of the third-party application. This is complex to implement, and has low projection efficiency.

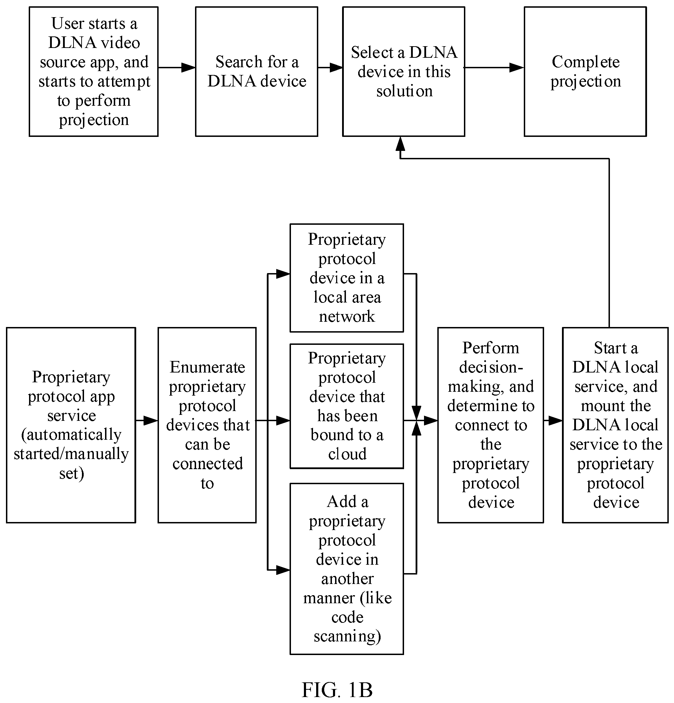

FIG. 1B shows an implementation of a technology 2. For example, a video on a mobile phone is projected to a television for playing. A player of the mobile phone no longer directly controls the television to perform projection, but transmits a content source of the projected video to a DLNA proxy service. The DLNA proxy service, instead of the mobile phone, transmits content data to the television, performs projection, and transfers a control command and a playing status.

In this method, the television needs to start a service of a proprietary protocol in advance, to implement a normal projection function.

Currently, a video content manufacturer can provide projection functions such as a high definition, a bullet comment, and a variable speed. However, these functions are generally available only to a player of the manufacturer. In other words, projection experience like the high definition, the bullet comment, and the variable speed can be achieved in a projection process only when the player of the manufacturer is installed on both a mobile phone and a television. Specifically, in the projection process, a projected video with the high definition and having the functions of the bullet comment and the variable speed can be played by using a television player A2 (a television player provided by a manufacturer A) only when a user uses a mobile phone player A1 of the manufacturer A on a mobile phone, and taps a projection button, and the user needs to manually start the player A2 that is of the television and that is used together with the mobile phone player A1. It can be learned that, in the projection process, user operation complexity is high, and ease of use of projection is low.

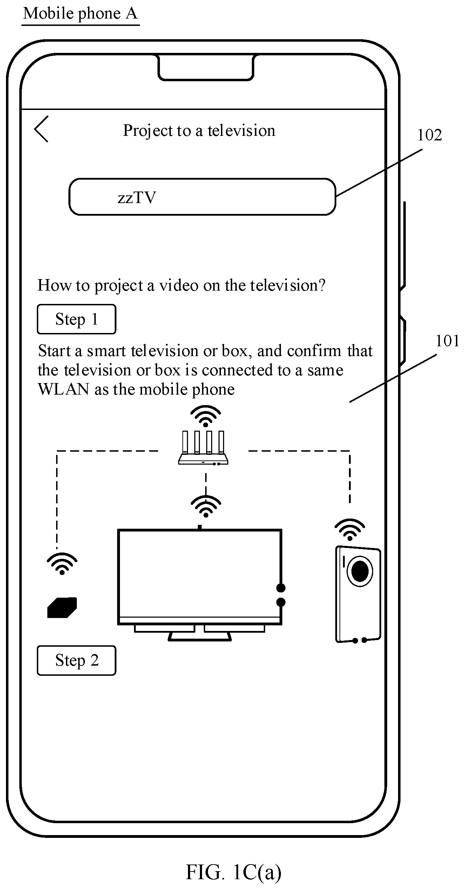

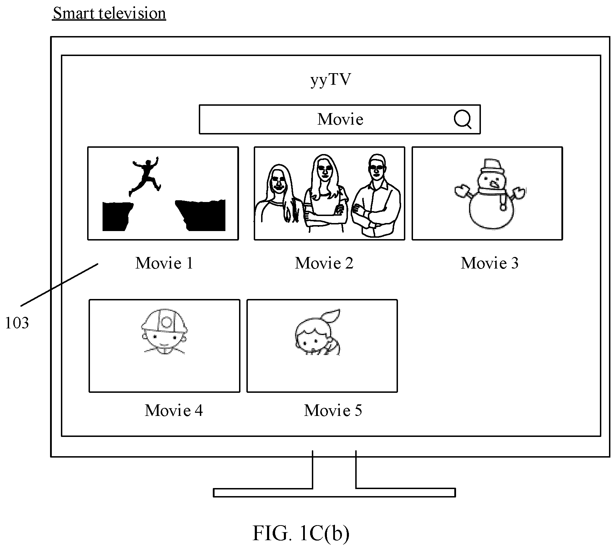

As shown in FIG. 1C(b), a user manually starts a player zzTV of a television, and the television displays an interface 103 of the player zzTV. The television can broadcast a message of the player zzTV being online. Therefore, another device can find the online player zzTV.

As shown in FIG. 1C(a), a mobile phone displays a projection interface 101. The projection interface 101 includes an option widget of a found available player that is started, for example, includes an option widget 102 of the player zzTV that is started on the television. Herein, the started player may be a player that has been started and that displays an interface in a foreground, or may be a player that has been started and that does not display an interface in a foreground.

In some examples, when the television has started the player zzTV in advance, as shown in FIG. 1C(a), in response to the user tapping the option widget 102, the mobile phone may indicate the television to play a projected video. The television plays, based on the indication of the mobile phone, the high-definition projected video by using the started player zzTV, and can provide the functions such as the bullet comment and the variable speed.

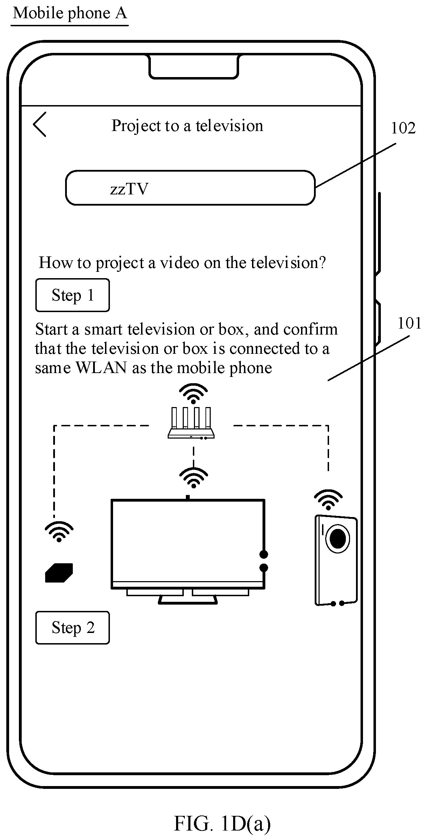

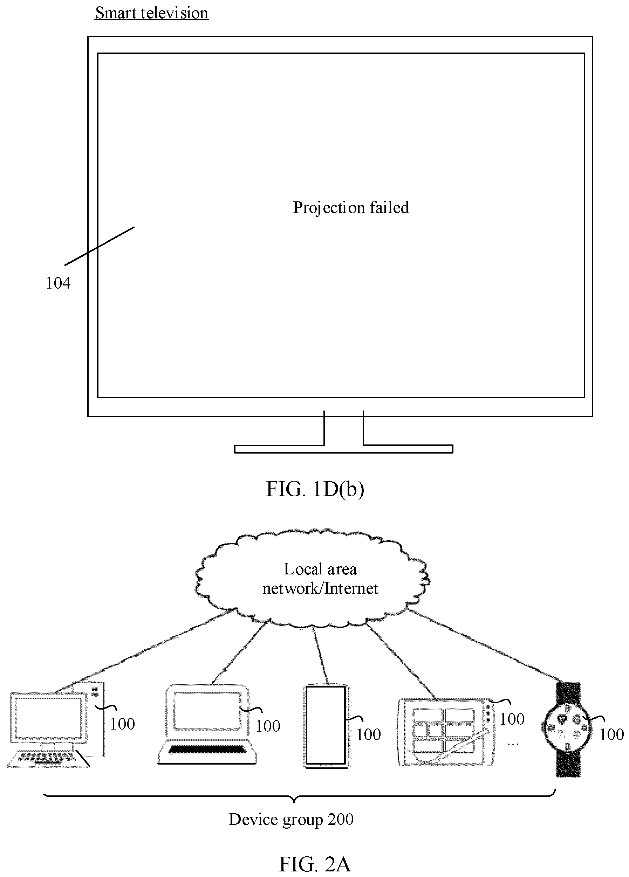

In some examples, when the television does not start the player zzTV in advance, as shown in FIG. 1D(a), in response to the user tapping the option widget 102, the mobile phone may indicate the television to play a projected video. The television starts, based on the indication of the mobile phone, a default system player to play the projected video. In some cases, the default system player started by the television is incompatible with the projected video, leading to a projection failure. As shown in FIG. 1D(b), prompt information "projection failed" may be displayed on an interface 104 of the television, to prompt the user that current projection fails. Alternatively, in some cases, the default system player started by the television is not a player used together with the mobile phone. As a result, the projection experience of the high definition, the bullet comment, and a variable-speed video cannot be provided.

It can be learned that, in the projection process, the high-definition projected video can be played by using the player, and the projection functions such as the variable speed and the bullet comment can be implemented only when the television installs and starts in advance the player that is used together with the mobile phone player. In addition, before projection at each time, the user needs to manually start a corresponding player of the television. This has complex operation steps and low human-machine interaction efficiency. When the corresponding player is not installed and started on the television in advance, the projection may fail.

To resolve the foregoing technical problem, an embodiment of this application provides a projection method. The following describes implementations of embodiments in detail with reference to the accompanying drawings.

A projection method provided in embodiments of this application may be applied to a device group 200 shown in FIG. 2A. Devices 100 in the device group 200 may communicate with each other through a local area network (local area network, LAN) or a wide area network (wide area network, WAN).

For example, a mobile phone, a tablet computer, a desktop computer, a smart watch, and a laptop computer of a user may be used as the device group 200. When the user logs in to the mobile phone, the tablet computer, the desktop computer, the smart watch, and the laptop computer by using a same account, the mobile phone, the tablet computer, the desktop computer, and the laptop computer may communicate with each other through the wide area network.

For another example, the mobile phone, the tablet computer, the desktop computer, the smart watch, and the laptop computer of the user may be connected to a same router. In this case, the mobile phone, the tablet computer, the desktop computer, the smart watch, and the laptop computer may form a local area network, and devices in the local area network may communicate with each other through the router.

For another example, the devices 100 may also form a peer-to-peer network (also referred to as a P2P network) through wireless communication (for example, Bluetooth, Wi-Fi, or a ZigBee network). For example, the user can add the mobile phone, the tablet computer, a smart speaker, and the laptop computer to a Wi-Fi network named "1234". The devices 100 in the Wi-Fi network form a P2P network, and all devices in the P2P network are members of the device group 200.

Certainly, the devices 100 in the device group 200 may be interconnected through a cellular network. Alternatively, the devices 100 may be interconnected by using a transfer device (for example, a USB data cable or a dock device), to implement a communication function between the devices 100 in the device group 200. Alternatively, some devices in the device group 200 are connected in a mode, and other devices are connected in another mode. In other words, different devices in the device group 200 may be connected in different modes. This is not limited in embodiments of this application.

In embodiments of this application, one or more devices 100 in the device group 200 may be used as source devices, and one or more devices 100 in the device group 200 may be used as destination devices. A source device may project content of the source device to a destination device for display. For example, the mobile phone is the source device, and a television is a destination device. The user may use the mobile phone to project a video to the television for playing.

In some embodiments, specific structures of the devices in the foregoing device group 200 may be the same or may be different.

For example, each device may be specifically a mobile phone, a tablet computer, a smart television, a wearable electronic device, a head unit, a laptop computer, an ultra-mobile personal computer (ultra-mobile personal computer, UMPC), a handheld computer, a netbook, a personal digital assistant (personal digital assistant, PDA), and a virtual reality device. This is not limited in embodiments of this application.

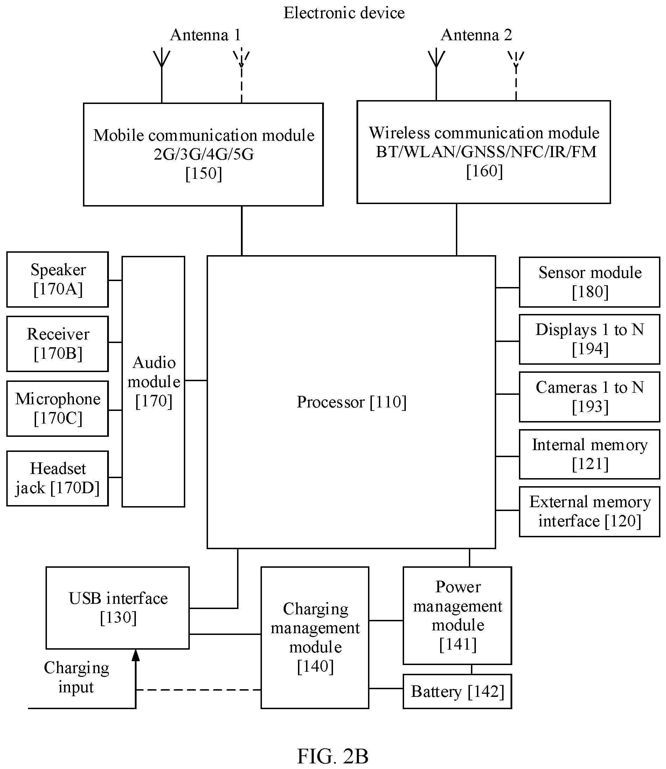

For example, FIG. 2B is a diagram of a structure of a device.

The device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 193, a display 194, and the like.

It may be understood that the structure shown in this embodiment of the present invention does not constitute a specific limitation on the device. In some other embodiments of this application, the device may include more or fewer components than those shown in the figure, or some components may be combined, or some components may be divided, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and therefore, improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the device. The charging management module 140 may further supply power to the device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the device may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the device may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the device. The mobile communication module 150 may include one or more filters, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, and the like), and displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components into which one or more communication processing modules are integrated. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the device, the antenna 1 and the mobile communication module 150 are coupled, and the antenna 2 and the wireless communication module 160 are coupled, so that the device can communicate with a network and another device by using a wireless communication technology.

The device implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. In some embodiments, the device may include one or N displays 194, where N is a positive integer greater than 1. The device may implement a shooting function by using the ISP, the camera 193, the video codec, the GPU, the display 194, the application processor, and the like. The ISP is configured to process data fed back by the camera 193. The camera 193 is configured to capture a static image or a video. In some embodiments, the device may include one or N cameras 193, where N is a positive integer greater than 1. The digital signal processor is configured to process a digital signal, and may process another digital signal in addition to a digital image signal. The video codec is configured to compress or decompress a digital video. The device may support one or more video codecs. In this way, the device may play or record videos in a plurality of encoding formats.

The external memory interface 120 may be configured to connect to an external storage card, for example, a micro SD card, to extend a storage capability of the device. The external memory card communicates with the processor 110 through the external memory interface 120, to implement a data storage function.

The internal memory 121 may be configured to store one or more programs, and the one or more programs include instructions. The processor 110 may run the instructions stored in the internal memory 121, so that the device performs the projection method provided in some embodiments of this application, various functional applications, data processing, and the like. The internal memory 121 may include a program storage area and a data storage area. The program storage area may store an operating system. The program storage area may further store one or more applications (such as Gallery and Contacts), and the like. The data storage area may store data (for example, Photos and Contacts) created during the use of the device, and the like. In addition, the internal memory 121 may include a high-speed random access memory, and may further include a non-volatile memory. In some other embodiments, the processor 110 runs the instructions stored in the internal memory 121 and/or the instructions stored in the memory disposed in the processor, so that the device performs the projection method provided in embodiments of this application, various functional applications, and data processing.

The device may implement audio functions by using the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The audio module 170 may be further configured to encode and decode an audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as "mike" or "mic", is configured to convert a sound signal into an electrical signal. The headset jack 170D is configured to connect to a wired headset. The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like. The touch sensor may be disposed on the display, and the touch sensor and the display form a touchscreen, which may also be referred to as a "touch screen". In addition, the device may further include one or more components such as a button, a motor, an indicator, and a SIM card interface. This is not limited in embodiments of this application.

The following describes in detail the projection method provided in embodiments of this application with reference to the accompanying drawings.

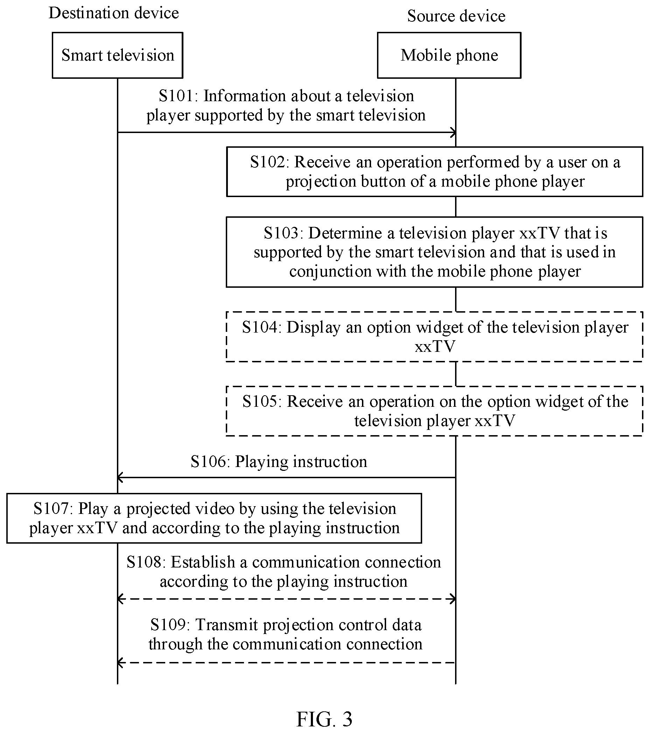

As shown in FIG. 3, an example in which a destination device during projection is a smart television (for example, a first device), a source device is a mobile phone (for example, a second device), and projected content is a video A is used. A projection method provided in embodiments of this application includes the following steps.

S101: The smart television sends, to the mobile phone, information about a television player supported by the smart television.

Optionally, the information about the player includes but is not limited to at least one piece of the following information: an identifier of the player, a type of the player, and a function supported by the player. Optionally, the function supported by the player includes but is not limited to at least one of the following functions: a high definition, a variable speed, and a bullet comment. Optionally, the high definition may be Blu-ray, a 1080p definition, or another level or class of video definition.

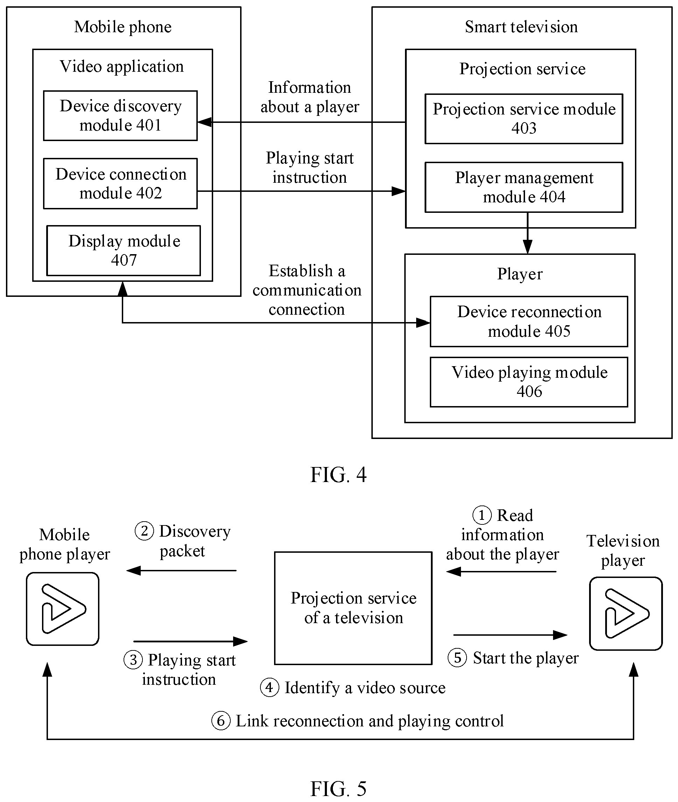

In this embodiment of this application, an application that can implement a projection function is installed on the mobile phone, and the application may include a corresponding functional module, configured to perform the method corresponding to this embodiment of this application. FIG. 4 is used as an example. A video application is installed on the mobile phone, and the video application may include a device discovery module 401, a device connection module 402, and a display module 407.

Optionally, a projection service and a player are installed on the smart television. The projection service and the player may include corresponding functional modules, configured to perform the method corresponding to this embodiment of this application. FIG. 4 is still used as an example. The projection service of the smart television includes a projection service module 403 and a player management module 404. The player of the smart television includes a device reconnection module 405 and a video playing module 406. The following describes functions of functional modules in the mobile phone and the smart television with reference to a method process.

In a possible implementation, a server pre-configures a list of players, and the smart television may obtain the list from the server, and use a player in the list as the information about the player supported by the smart television. The projection service module 403 of the smart television may read, through an interface of the player management module 404, the information about the player supported by the smart television.

In a possible implementation, the mobile phone and the smart television perform device discovery according to an SSDP protocol. In a device discovery process, as shown in FIG. 4, the smart television sends a discovery packet to the mobile phone by using the projection service module 403. Optionally, the discovery packet is an SSDP packet, and the SSDP packet includes the information about the player supported by the smart television. Optionally, the SSDP packet may further include an identifier of the smart television and manufacturer information of the smart television.

Optionally, the SSDP packet includes but is not limited to at least one of the following packets: a notification (notification) packet and a packet carrying a device description document.

Optionally, the smart television may add a field to the SSDP packet, and indicate, based on the newly added field, the information about the player supported by the smart television. Alternatively, the smart television may indicate, based on a reserved field in the SSDP packet, the information about the player supported by the smart television.

For example, some fields in the SSDP are as follows:
<manufacturer>xxxVision</manufacturer>
<castService>13,xy</ castService>
xxxVision indicates the smart television, and 13,xy indicates the player supported by the smart television.

In a possible implementation, the smart television may start a projection service of a system when the smart television is powered on, and the projection service obtains, by using the foregoing method, the information about the player supported by the smart television. During device discovery, the projection service module 403 of the smart television encapsulates the pre-read information about the player supported by the smart television into the SSDP packet, and sends the SSDP packet to a player of the mobile phone.

Alternatively, in another possible implementation, as shown in FIG. 5, during device discovery, the smart television may read, by using the projection service, the information about the player supported by the smart television, and carry, by using the discovery packet, the information about the player supported by the smart television. An occasion and a manner of reading the information about the player supported by the smart television are not limited in embodiments of this application.

In a possible implementation, the smart television may periodically send the SSDP packet, so that a peripheral device can quickly obtain the information about the player supported by the smart television.

Alternatively, in another possible implementation, another device actively sends a device search message, and after receiving the device search message, the smart television sends the SSDP packet. For example, the smart television may broadcast an SSDP packet. The SSDP packet carries information about television players xxTV and yyTV that are supported by the smart television.

Optionally, the device search message is a broadcast message or a multicast message. For example, the device search message is an m-search message in the SSDP.

S102: The mobile phone receives an operation performed by a user on a projection button of the mobile phone player.

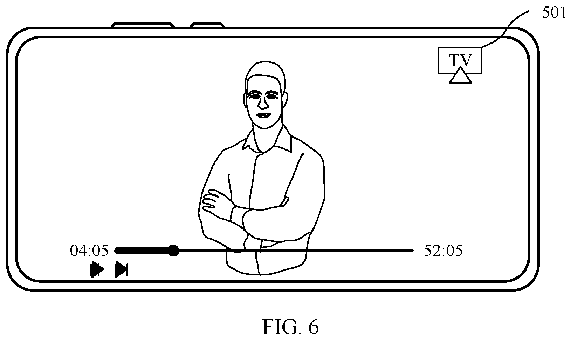

In some scenarios, the user may use the player installed on the mobile phone to project a video in the mobile phone to the smart television for playing. For example, in a process in which the mobile phone plays the video A by using the display module 407 of the player A, the user taps a projection button 501 on an interface shown in FIG. 6.

In some embodiments, the projection button is also an implementation of a projection control.

A sequence of performing S101 and S 102 is not limited in this embodiment of this application.

S103: The mobile phone determines the television player xxTV that is supported by the smart television and that is used with the mobile phone player in a matching manner.

That the player of the mobile phone is used in conjunction with the player of the television means that the player of the mobile phone and the player of the television support a same projection data transmission protocol. Optionally, the player of the mobile phone and the player of the television belong to a same manufacturer or different manufacturers.

As shown in FIG. 6, in response to the user tapping the projection button 501, the mobile phone used as the source device may broadcast a search message, to search for an available peripheral destination device. After receiving the search message, the smart television may broadcast the SSDP packet. The SSDP packet carries the information about the television players xxTV and yyTV that are supported by the smart television. After receiving the SSDP packet from the smart television, the mobile phone may determine, based on the information about the television players xxTV and yyTV that is carried in the SSDP packet, whether a television player that is used together with a mobile phone player A exists in television players supported by the smart television. The mobile phone determines that the television player xxTV supported by the smart television is the television player that is used together with the mobile phone player A. This means that the smart television can start the television player xxTV that is used together with the mobile phone player A and provide projection functions of the high definition, the variable speed, and the bullet comment. In this case, the mobile phone sets the television player xxTV as a preferred player.

Optionally, the preferred player may be an original system player of the smart television, or a player provided by a third party. A type of the preferred player is not limited in embodiments of this application.

S104: The mobile phone displays an option widget of the television player xxTV.

After determining the television player xxTV that is supported by the smart television and that is used in conjunction with the mobile phone player, the mobile phone may display, on a screen, the option widget of the television player xxTV according to a display rule, to prompt the user to tap the option widget of the player xxTV.

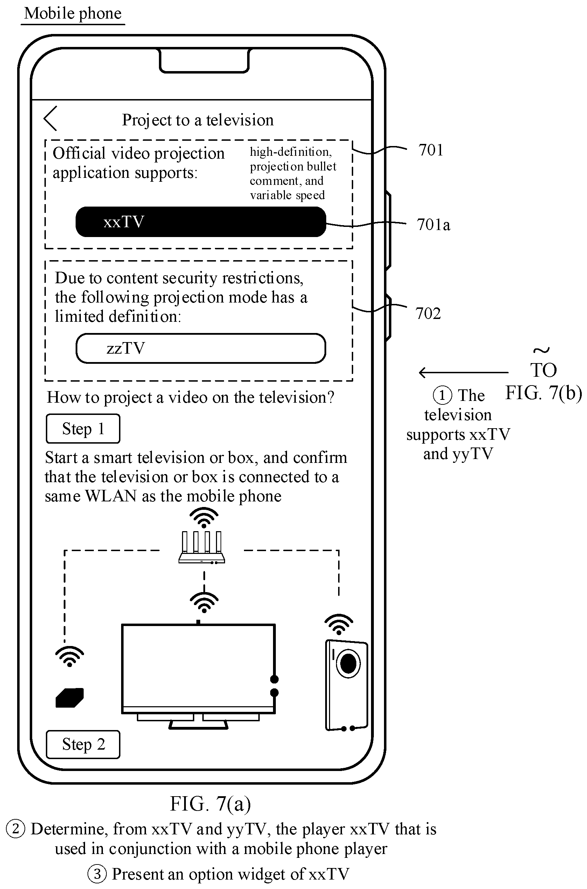

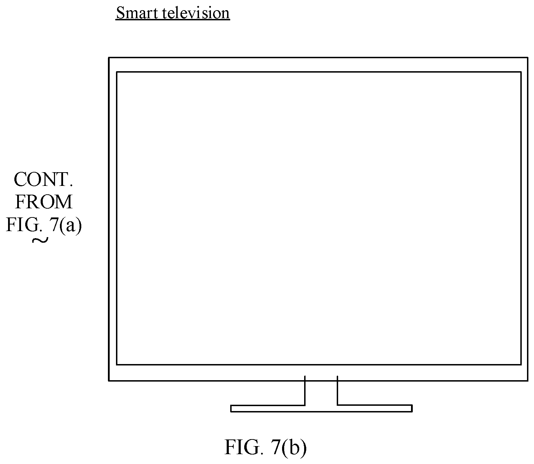

In some embodiments, according to the display rule, the mobile phone displays the option widget of the player xxTV and an option widget of another player in different regions of the screen. For example, in FIG. 7(b), the smart television broadcasts the information about the players xxTV and yyTV supported by the smart television. As shown in FIG. 7(a), after receiving the information about the players xxTV and yyTV, the mobile phone may determine that a player that is supported by the smart television and that is used in conjunction with the mobile phone player is the player xxTV. The mobile phone may display, in a region 701 of the screen, an option widget 701a (for example, a projection control of a first player) of the player xxTV. For another example, as shown in FIG. 7(a), the mobile phone may further display, in a region 702 of the screen, an option widget (for example, an option widget of the player zzTV) of another found player, where the another player is a player not supported by the smart television. In this way, the option widget of the player supported by the smart television is arranged and displayed in an upper region of the screen. This can draw attention of the user and increase a probability that the user taps the option widget of the player supported by the smart television, to trigger the smart television to automatically start the player supported by the smart television for playing, thereby implementing efficient and convenient projection experience.

Alternatively, in some embodiments, according to the display rule, the mobile phone displays the option widget of the player xxTV and the option widget of the another player based on different user interface (user interface, UI) effect. For example, as shown in FIG. 7(a), the mobile phone may display, in a dark background, the option widget of the player xxTV supported by the smart television, and display, in a light background, the option widget of the player not supported by the smart television. In this way, the option widget of the player supported by the smart television is presented to the user in a prominent UI style, and the user can be prompted to tap to select the player supported by the smart television, to trigger the smart television to automatically start the player supported by the smart television for playing.

In the method, the user does not need to start, on the smart television in advance, the television player that is used in conjunction with the mobile phone player. The mobile phone may determine, based on interaction and negotiation with the smart television, the television player that is supported by the smart television and that is used in conjunction with the mobile phone player, and display the option widget of the television player, to prompt the user to tap the option widget. This triggers the smart television to automatically start the television player and play a projected video, thereby improving projection experience.

The foregoing uses an example in which the player supported by the smart television is xxTV. It should be noted that the smart television may support one or more players. This is not limited in embodiments of this application. When the smart television supports a plurality of types of players or a plurality of players, the mobile phone may use, as the preferred player, a player that is in the plurality of types of players or the plurality of players and that is used together with the mobile phone player. The mobile phone may highlight an option widget of the preferred player according to the display rule, to increase a probability that the user taps the option widget of the preferred player. Further, this triggers the smart television to automatically start the preferred player, to provide the projection functions of the high definition, the variable speed, and the bullet comment.

S105: The mobile phone receives an operation on the option widget of the television player xxTV.

For example, as shown in FIG. 7(a), the mobile phone receives a tap operation performed by the user on the option widget 701a of the player xxTV, to indicate to play the projected video by using the television player xxTV.

Alternatively, another manner may indicate to play the projected video by using the television player xxTV. For example, the user inputs a speech "start xxTV", to indicate that the user selects the player xxTV. A manner of selecting the player by the user is not limited in embodiments of this application.

S106: The mobile phone sends a playing instruction to the smart television in response to the operation performed by the user on the option widget of the player xxTV.

The playing instruction may instruct or be used to request the smart television to play the projected video by using the player xxTV. The playing instruction may explicitly indicate the player xxTV, or implicitly indicate the player xxTV. The playing instruction may also be referred to as a playing start request, a projection playing instruction, a projection playing start request, a projection playing request,playing a projection instruction, or the like.

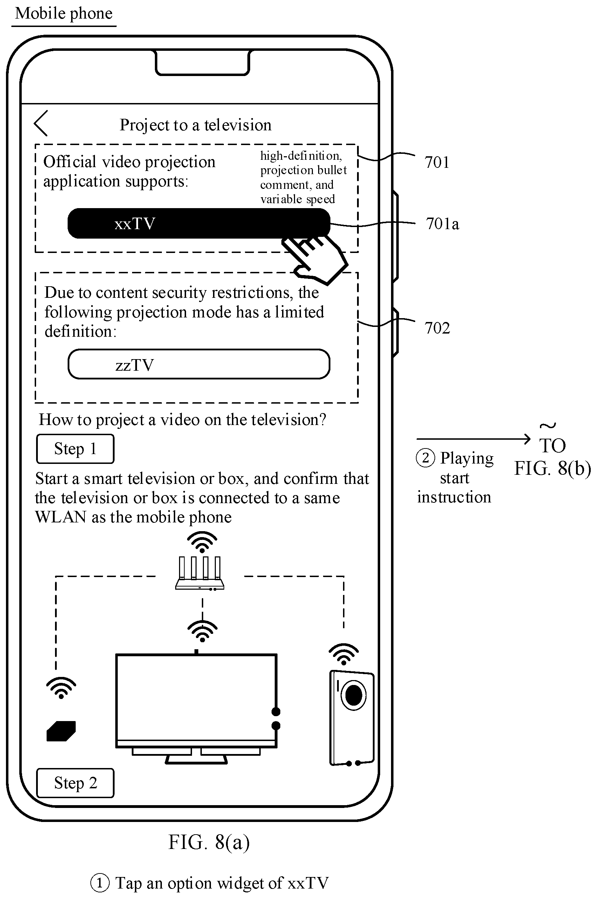

For example, in FIG. 8(a), in response to an operation (for example, a projection operation) of the user tapping the option widget 701a of the player xxTV, the mobile phone sends the playing instruction, to instruct the smart television to play the projected video.

In a possible implementation, the device connection module 402 of the player of the mobile phone may obtain, from the device discovery module 401, the information about the player supported by the smart television. After the user taps the option widget 701a of the player xxTV shown in FIG. 8(a), the device connection module 402 of the mobile phone may determine, based on the information obtained from the device discovery module 401, that the player xxTV is the player supported by the smart television. Then, the device connection module 402 of the mobile phone sends the playing instruction to the smart television.

Optionally, the playing instruction may include at least one piece of the following information: source information of the projected video, network connection information of the mobile phone, identification information of the mobile phone player, identification information of the television player that is used in conjunction with the mobile phone player, and a download address of the television player that is used in conjunction with the mobile phone player. The source information of the projected video includes but is not limited to: a source type of the projected video, a playing address of the projected video, and a provider of the projected video. The network connection information of the mobile phone includes but is not limited to: an IP address of the player of the mobile phone and a port number of the player of the mobile phone.

For example, the user projects the video in the mobile phone to the smart television for playing. The projected video is the video A in the mobile phone, and the playing instruction may carry a uniform resource locator (uniform resource locator, URL) address of the video A, an IP address of the mobile phone, and information about a content provider (for example, the manufacturer A) of the video A.

Optionally, that the mobile phone sends the playing instruction may be implemented as follows: The mobile phone sends the playing instruction to the smart television according to a SOAP protocol.

Optionally, the mobile phone may add a field to the playing instruction, and indicate the source information of the projected video and the address of the mobile phone by using the newly added field. Alternatively, the smart television may indicate the source information of the projected video and the address of the mobile phone by using a reserved field in the playing instruction.

Optionally, the playing instruction may further include at least one piece of the following information: a member of the player and bullet comment information.

For example, some fields in the playing instruction are as follows:
<sourceID>xxxxx</sourceID>
<extendData>xyyy</extendData>
xxxxx indicates the address of the source device, namely, the mobile phone, and xyyy indicates extended information like the member of the player or the bullet comment information.

In a possible implementation, S104 and S105 are optional steps. For example, in some examples, after detecting that the user taps the projection button 501 (for example, the projection operation) shown in FIG. 8(a), the mobile phone determines, based on the SSDP packet from the smart television, the television player xxTV that is supported by the smart television and that is used in conjunction with the mobile phone player, and sends the playing instruction, to instruct the smart television to play the projected video by using the television player xxTV.

S107: The smart television plays the projected video by using the television player xxTV according to the playing instruction.

In a possible implementation, after the projection service of the smart television receives the playing instruction by using the projection service module 403, the player management module 404 may determine, according to the playing instruction, the player that performs projection playing on the smart television.

For example, if the playing instruction includes an identifier of a content provider A, after receiving the playing instruction, the smart television may determine, based on the identifier of the content provider A in the playing instruction, to play, on the smart television, the projected video by using the television player xxTV of the content provider A. This indication manner may be referred to as an implicit indication manner.

For another example, if the playing instruction includes an identifier of the television player xxTV, after receiving the playing instruction, the smart television may determine, based on the identifier of the television player xxTV in the playing instruction, to play, on the smart television, the projected video by using the television player xxTV. This indication manner may be referred to as an explicit indication manner.

For another example, if the playing instruction includes an identifier of the mobile phone player, after receiving the playing instruction, the smart television may determine, based on the identifier of the mobile phone player in the playing instruction, to play, on the smart television, the projected video by using the television player xxTV that is used in conjunction with the mobile phone player. This indication manner may be referred to as an implicit indication manner.

Then, the player management module 404 of the smart television may determine whether the player xxTV that the user wants to use to play the projected video A is installed locally, and perform the following different operations based on whether the player xxTV is installed locally.

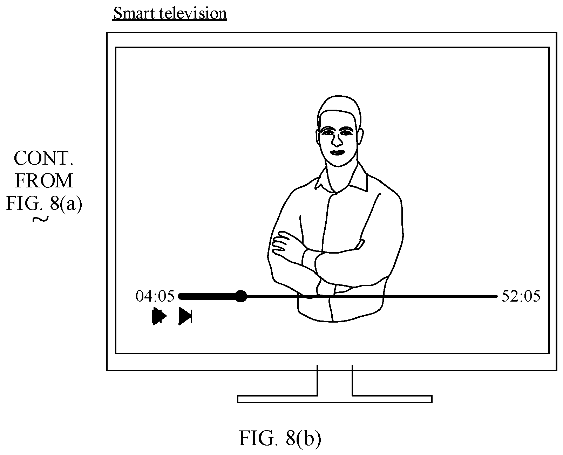

In some examples, if the player xxTV that the user wants to use is locally installed on the smart television, the player management module 404 may directly start the player xxTV. The player management module 404 may further forward the playing instruction to the player xxTV, and the video playing module 406 of the player xxTV plays the projected video A according to the playing instruction. For example, the player xxTV obtains a resource of the video A based on a playing address of the video A, and plays the video A. FIG. 8(b) shows a picture of the projected video played by the smart television.

In some other examples, if the player xxTV is not installed locally on the smart television, the player management module 404 downloads and installs the player xxTV from a corresponding download address. After installation is completed, the player management module 404 sends the playing instruction to the player xxTV, and the player xxTV downloads and plays the projected video A according to the playing instruction.

Optionally, if the playing instruction carries the download address of the player xxTV, the player management module 404 may download the player xxTV from the corresponding download address according to the playing instruction. Alternatively, the player management module 404 may obtain the corresponding download address by itself through a network connection. A manner of obtaining the download address is not limited in embodiments of this application.

For an application manufacturer, because the smart television has automatically started the television player xxTV that is used together with the mobile phone player, the application manufacturer enables a function like a video resolution in current projection. In other words, the smart television can provide the projection experience of the high definition, the variable speed, and the bullet comment by using the player xxTV.

In the method, a playing instruction in a related technology is improved. The mobile phone carries the source information of the projected video in the playing instruction. The smart television can be triggered to automatically start, based on the source information of the projected video carried in the playing instruction, the player xxTV that is used together with the mobile phone player, and provide the projection experience of the high definition, the variable speed, and the bullet comment by using the player xxTV. In this process, the user does not need to manually start a corresponding player of the smart television, a user operation is simple, and interaction experience and interaction efficiency in the projection process can be improved.

Optionally, the method may further include the following steps S108 and S109.

S108: The smart television establishes a communication connection to the mobile phone according to the playing instruction.

In a possible implementation, after receiving the playing instruction, the smart television may establish a communication link to the mobile phone based on the network connection information that is carried in the playing instruction and that is of the mobile phone. For example, the device reconnection module 405 of the smart television establishes a connection to the player of the mobile phone based on the IP address of the mobile phone player and the port number of the mobile phone player that are carried in the playing instruction.

Optionally, the communication connection established between the smart television and the mobile phone may be a proprietary protocol-based communication connection. A proprietary protocol may be a projection data transmission protocol customized according to a standard of a content manufacturer of the projected video. In this way, the communication connection between the mobile phone player and the television player of the content manufacturer is established according to the proprietary protocol of the content manufacturer, to encrypt data transmission, release a definition limitation, and improve a playing control capability.

For example, the communication connection may be a transmission control protocol (transmission control protocol, TCP)-based connection provided by the content manufacturer. In this embodiment of this application, a process of establishing the communication connection between the smart television and the mobile phone may be referred to as a link reconnection (reconnection for short) process.

In some other embodiments, the playing instruction does not include the network connection information of the mobile phone. In this case, the television may initiate a search procedure, and obtain the network connection information of the mobile phone by using the search procedure, to establish the communication connection to the mobile phone.

S109: The mobile phone receives a control instruction A of the user, and transmits, through the communication connection, projection control data related to the control instruction A.

After the smart television is successfully reconnected to the mobile phone, interaction may be performed through the reconnection link, so that the mobile phone performs playing control on the projected video played on the smart television.

For example, the user inputs the control instruction A by using the mobile phone player, and the control instruction A is used to switch a definition of the projected video. The mobile phone sends the control instruction A to the smart television through the reconnection link, and the smart television switches the definition of the projected video according to the control instruction A.

For another example, the user inputs a bullet comment by using the mobile phone player. The mobile phone sends bullet comment information to the smart television through the reconnection link, and the smart television displays the bullet comment in a process of playing the projected video.

For another example, the user inputs a variable-speed playing instruction A by using the mobile phone player, and the variable-speed playing instruction A instructs switching of a playing speed of the projected video. The mobile phone sends the variable-speed playing instruction to the smart television through the reconnection link, to instruct the smart television to switch the playing speed of the projected video.

In this method, an interaction channel between different device-side applications of the video content manufacturer can be connected through the link reconnection. For example, an interaction channel between the mobile phone player and the television player that is of the same manufacturer as the mobile phone player and that is used in conjunction with the mobile phone player can be connected. In this way, the smart television can provide the user with higher-definition projection viewing experience and more interesting projection interaction manners such as the bullet comment and the variable speed by using the television player that is used in conjunction with the mobile phone player, to easily implement playing control.

In addition, in this method, the television player can also be reconnected to the matched mobile phone player without starting, in advance, the television player that is used in conjunction with the mobile phone player on the smart television, to implement playing control. It can be learned that according to the method, the mobile phone can control playing of the television while user operation complexity is reduced, thereby improving the projection experience.

For another example, in some other embodiments, the mobile phone player and the television player belong to different manufacturers, but the mobile phone player and the television player support a same projection screen data transmission protocol. In this case, an interaction channel between the mobile phone player and the television player that is used in conjunction with the mobile phone player can also be connected by using the smart television. In addition, the smart television provides the user with higher-definition projection viewing experience and more interesting projection interaction manners such as the bullet comment and the variable speed by using the television player that is used in conjunction with the mobile phone player, to easily implement playing control.

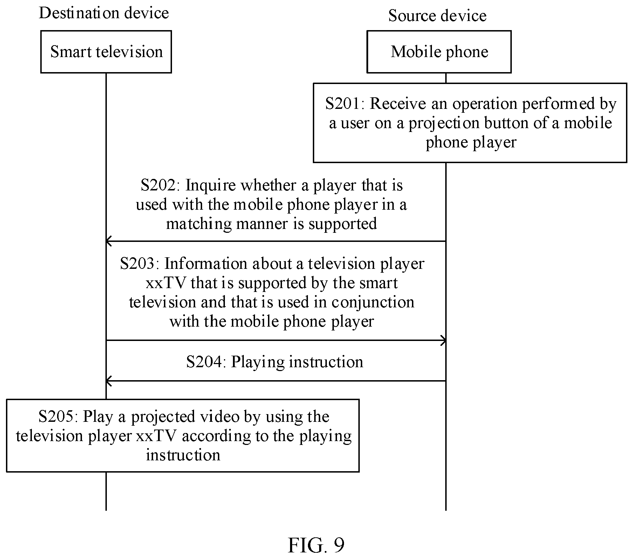

The foregoing shows an example of a procedure in which the smart television and the mobile phone negotiate the player used for projection of the smart television. The projection negotiation procedure between the smart television and the mobile phone is not limited in embodiments of this application. For example, FIG. 9 shows another example of a procedure of negotiating a player used for projection of a smart television. As shown in FIG. 9, the procedure includes the following steps.

S201: A mobile phone receives an operation performed by a user on a projection button of a mobile phone player.

For an implementation of S201, refer to the related description of S102. Details are not described again.

S202: The mobile phone sends an inquiry message.

The inquiry message is used to inquire whether another device supports a player that is used with the mobile phone player in a matching manner.

Optionally, the inquiry message includes information about the mobile phone player. The information about the mobile phone player includes but is not limited to at least one piece of the following information: an identifier of the mobile phone player, a content manufacturer corresponding to the mobile phone player, and a function supported by the mobile phone player.

Optionally, the inquiry message may be any one of a unicast message, a broadcast message, or a multicast message.

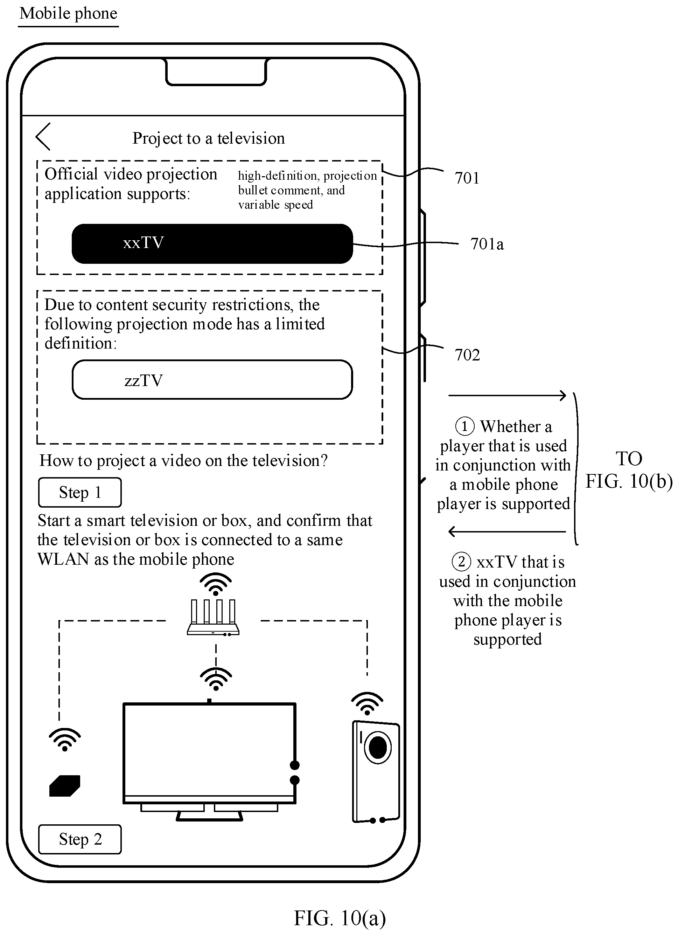

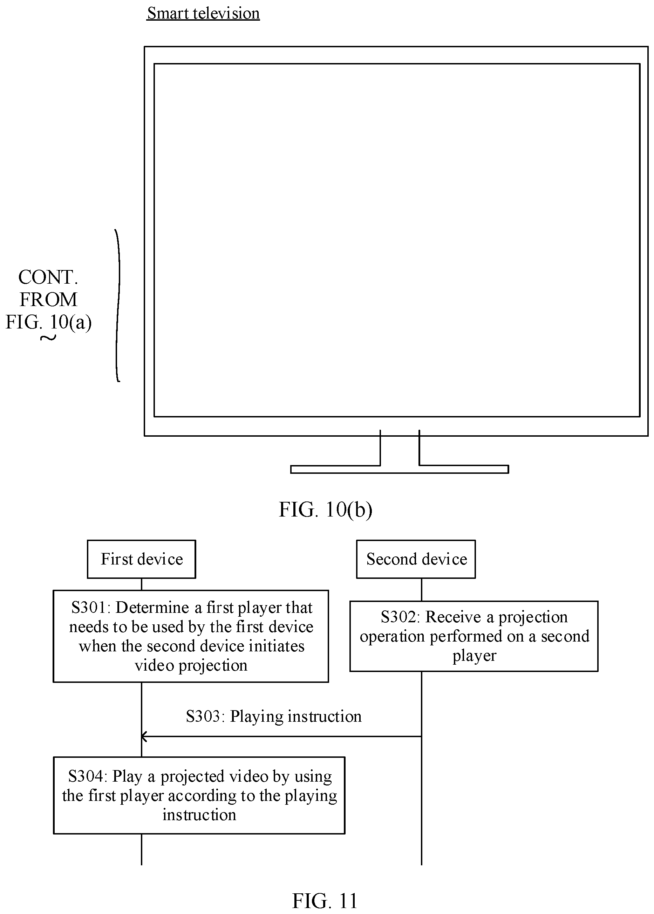

For example, in step ① in FIG. 10(a) and FIG. 10(b), the mobile phone sends the inquiry message to inquire whether a peripheral device (including the smart television) supports the player that is used in conjunction with the mobile phone player.

S203: The smart television sends a response message.

The response message includes information about a television player xxTV that is supported by the smart television and that is used in conjunction with the mobile phone player.

It should be understood that, after receiving the inquiry message, the smart television may determine, based on the information about the mobile phone player carried in the inquiry message, a television player that is used in conjunction with the mobile phone player and that is supported by the smart television. For example, if the smart television supports television players xxTV and yyTV, where xxTV is the television player that is used in conjunction with the mobile phone player. In step ② of FIG. 10(a) and FIG. 10(b), the smart television may feed back the information about the television player xxTV to the mobile phone, so that the mobile phone can learn that the television player that is supported by the smart television and that is used in conjunction with the mobile phone player is the television player xxTV.

S204: The mobile phone sends a playing instruction.

In some examples, after detecting that the user taps the projection button, the mobile phone may send the playing instruction after determining, through negotiation with the smart television, that a player used for projection of the smart television is the xxTV. Alternatively, after detecting that the user taps the projection button, the mobile phone may display an option widget of the television player xxTV after determining, through negotiation with the smart television, that a player used for projection of the smart television is the xxTV. After detecting that the user taps the option widget of the television player xxTV, the mobile phone sends the playing instruction.

S205: The smart television plays a projected video by using the television player xxTV according to the playing instruction.

For implementations of S204 and S205, refer to related descriptions of S106 and S107. Details are not described again.

FIG. 11 shows another example of a procedure of a projection method according to an embodiment of this application. As shown in FIG. 11, the method includes the following steps.

S301: A first device determines a first player that needs to be used by the first device when a second device initiates video projection. The first player is a player that is supported by the first device and that is used in conjunction with the second player.

In a possible implementation, S301 may be implemented as follows: The first device sends a discovery packet. The discovery packet includes information about a player supported by the first device, and the information about the player supported by the first device is used as an input for the second device to determine the first player. Correspondingly, after receiving the discovery packet sent by the first device, the second device determines, from players supported by the first device, the player that is used in conjunction with the second player as the first player.

For example, in FIG. 7(b), the smart television (for example, the first device) broadcasts the information about the players xxTV and yyTV supported by the smart television. As shown in FIG. 7(a), after receiving the information about the players xxTV and yyTV that are supported by the smart television, the mobile phone (for example, the second device) may determine that a player that is supported by the smart television and that is used in conjunction with the mobile phone player (for example, the second player) is the first player. For example, if the player xxTV supported by the smart television and the mobile phone player are players of a same manufacturer, the mobile phone may use the player xxTV as the first player. For another example, if the player xxTV supported by the smart television and the mobile phone player support a same projection data transmission protocol, the mobile phone may use the player xxTV as the first player.

In another possible implementation, S301 may be implemented as: The first device receives an inquiry message sent by the second device, where the inquiry message is used to query the player that is supported by the first device and that is used in conjunction with the second player; determines the first player based on the inquiry message; and sends a response message, where the response message includes information about the first player.

For example, as shown in FIG. 10(a) and FIG. 10(b), the mobile phone sends the inquiry message to the smart television, to inquire the television player that is supported by the smart television and that is used in conjunction with the mobile phone player. If the smart television supports the television players xxTV and yyTV, where xxTV is the television player that is used in conjunction with the mobile phone player. The smart television may feed back the information about the television player xxTV to the mobile phone by using the response message, so that the mobile phone can learn that the television player that is supported by the smart television and that is used in conjunction with the mobile phone player is the television player xxTV.

S302: The second device receives a projection operation performed on the second player.

For example, the projection operation may be the operation of tapping the projection button 501 shown in FIG. 6, or the operation of tapping the option widget 701a shown in FIG. 7(a). Alternatively, the projection operation may be another operation.

S303: The second device sends a playing instruction to the first device in response to the projection operation.

Correspondingly, the first device receives the playing instruction sent by the second device.

The playing instruction is sent as triggered by an operation performed on a projection control of the second player of the second device, and the playing instruction instructs the first device to play a projected video by using the first player.

The second device may encapsulate the information associated with the first player in the playing instruction, so that the first device starts the first player based on the information associated with the first player. Optionally, the information associated with the first player includes but is not limited to at least one piece of the following information: source information of the projected video, network connection information of the second device, a download address of the first player, an identifier of the first player, and an identifier of the second player. For a specific description of the at least one piece of information, refer to the foregoing embodiments. Details are not described again.

S304: The first device plays the projected video by using the first player according to the playing instruction.

For an implementation of S304, refer to S107 or S205. Details are not described again.

For example, the first device is the television, and the second device is the mobile phone. The mobile phone and the television can determine, through negotiation, the television player (for example, the first player) that is supported by the television and that is used in conjunction with the mobile phone player (for example, the second player). In this way, after receiving the playing instruction, the television can automatically start the television player according to the playing instruction, and play the projected video by using the television player. Because the television player can be used in conjunction with the mobile phone player, the television player can provide projection experience like a high definition, a variable speed, and a bullet comment. In addition, in a projection process, a user does not need to manually start, in advance, the television player that is of the television and that is used in conjunction with the mobile phone player. This can reduce user operation complexity, and improve ease of use of a projection function.

The foregoing one or more interfaces are all examples, and there may be another interface design manner. A specific interface design manner is not limited in this application. For example, the foregoing uses an example in which sending of the playing instruction is triggered by using the option widget of the player. In some other embodiments, a control that triggers sending of the playing instruction may be another control, for example, may be an option button. This is not limited in embodiments of this application.

For descriptions of some interfaces in the accompanying drawings, refer to related descriptions in similar accompanying drawings.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution sequence is an only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the foregoing method embodiments may be implemented separately or in combination.

For example, that a device (for example, a device A) obtains information from another device (for example, a device B) may mean that the device A directly receives the information from the device B, or may mean that the device A receives the information from the device B through another device (for example, a device C). When the device A receives the information from the device B through the device C, the device C may transparently transmit the information, or may process the information, for example, add the information to different messages for transmission or screen the information, and send only information obtained through screening to the device A. Similarly, in various embodiments of this application, that the device A sends information to the device B may mean that the device A directly sends the information to the device B, or may mean that the device A sends the information to the device B through another device (for example, the device C).

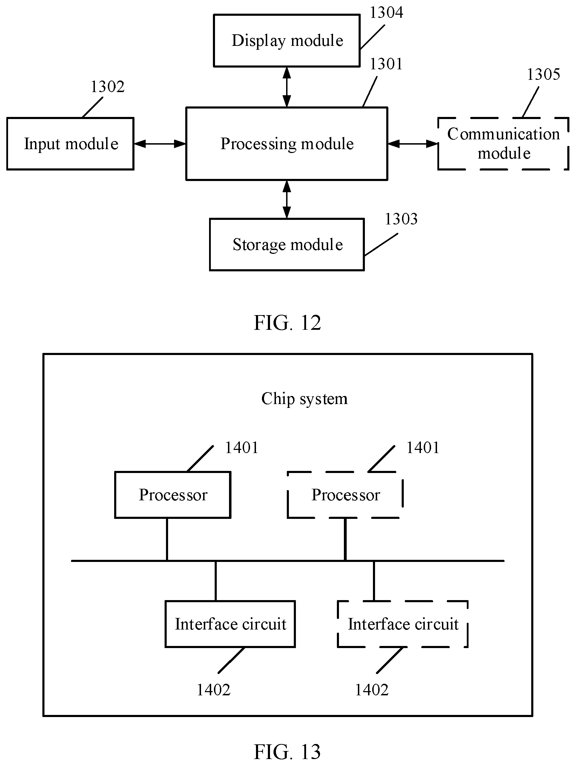

Some other embodiments of this application provide an apparatus. The apparatus may be the first device or the second device. The apparatus may include a display, a memory, and one or more processors. The display and the memory are coupled to the processor. The memory is configured to store computer program code. The computer program code includes instructions. When the processor executes the instructions, the apparatus may perform functions or steps in the foregoing method embodiments. For a structure of the apparatus, refer to a device (apparatus) shown in FIG. 12.

A core structure of the apparatus may be represented as a structure shown in FIG. 12. The apparatus includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of user equipment. Specifically, the processing module 1301 may be configured to control, based on a specific trigger condition, content displayed on a primary screen. The processing module 1301 is further configured to process input instructions or data, and determine a display style based on processed data.

The input module 1302 is configured to obtain an instruction or data entered by a user, and transmit the obtained instructions or data to another module of the device. Specifically, an input manner of the input module 1302 may include a touch, a gesture, proximity to the display, or the like, or may be a voice input. For example, the input module may be the display of the device, and may obtain an input operation of the user, generate an input signal based on the obtained input operation, and transmit the input signal to the processing module 1301.

The storage module 1303 may include a volatile memory and/or a non-volatile memory. The storage module is configured to store instructions or data related to at least one of other modules of the user equipment.

The display module 1304 may include, for example, a liquid crystal display (LCD), a light-emitting diode (LED) display, an organic light-emitting diode (OLED) display, a micro-electromechanical system (MEMS) display, or an electronic paper display. The display module 1304 is configured to display content that can be watched by the user.

Optionally, the apparatus further includes a communication module 1305, configured to support a personal apparatus in communicating with another personal apparatus (through a communication network). For example, the communication module may be connected to a network through wireless communication or wired communication, to communicate with the another personal apparatus or a network server. The wireless communication may use at least one of cellular communication protocols, for example, 5G, long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

It should be noted that each functional module of the apparatus may perform one or more steps in the foregoing method embodiments.

An embodiment of this application further provides a chip system. As shown in FIG. 13, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of a device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the device is enabled to perform the steps in the foregoing embodiments. Certainly, the chip system may further include another discrete device. This is not specifically limited in this embodiment of this application.

An embodiment of this application further provides a readable storage medium. The readable storage medium includes instructions, and when the instructions are run on the foregoing device, the device is enabled to perform functions or steps in the foregoing method embodiments.

An embodiment of this application further provides a program product. When the program product runs on a device, the device is enabled to perform functions or steps in the foregoing method embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A projection method, applied to a first device, wherein the method comprises:
determining a first player that needs to be used by the first device when a second device initiates video projection, wherein the first player is a player that is supported by the first device and that is used in conjunction with a second player;
receiving a playing instruction sent by the second device, wherein the playing instruction is sent as triggered by an operation performed on a projection control of the second player of the second device, and the playing instruction instructs the first device to play a projected video by using the first player; and
playing the projected video by using the first player according to the playing instruction.

2. The method according to claim 1, wherein the playing instruction comprises at least one piece of the following information: source information of the projected video, network connection information of the second device, a download address of the first player, an identifier of the first player, and an identifier of the second player.

3. The method according to claim 1 or 2, wherein playing the projected video by using the first player comprises:
if the first player is installed on the first device, starting the first player, and playing the projected video by using the first player; or
if the first player is not installed on the first device, downloading and installing the first player based on the download address of the first player; and
starting the first player, and playing the projected video by using the first player.

4. The method according to any one of claims 1 to 3, wherein the method further comprises:
establishing a communication connection to the second device according to the playing instruction; and
receiving, through the communication connection, projection control data sent by the second device, wherein the projection control data comprises at least one type of the following data: bullet comment data, variable speed data, and definition data.

5. The method according to any one of claims 1 to 4, wherein determining the first player that needs to be used by the first device when the second device initiates video projection comprises:
sending a discovery packet, wherein the discovery packet comprises information about a player supported by the first device, and the information about the player supported by the first device is used as an input for the second device to determine the first player; or
receiving an inquiry message sent by the second device, wherein the inquiry message is used to inquire the player that is supported by the first device and that is used in conjunction with the second player;
determining the first player based on the inquiry message; and
sending a response message, wherein the response message comprises information about the first player.

6. The method according to any one of claims 1 to 5, wherein the information about the player comprises at least one piece of the following information: an identifier of the player, a content manufacturer corresponding to the player, and a function supported by the player; and
the function supported by the player comprises at least one of the following functions: a high definition, a variable speed, and a bullet comment.

7. The method according to any one of claims 1 to 6, wherein the source information of the projected video comprises at least one piece of the following information: a playing address of the projected video and a provider of the projected video; and/or
the network connection information of the second device comprises at least one piece of the following information: an address of the second player of the second device and a port number of the second player.

8. The method according to any one of claims 1 to 7, wherein the playing instruction further comprises membership information and/or bullet comment information of the first player.

9. The method according to any one of claims 1 to 8, wherein the playing instruction comprises a first field, and the first field indicates the at least one piece of the following information: the source information of the projected video, the network connection information of the second device, the download address of the first player, the identifier of the first player, and the identifier of the second player.

10. A projection method, applied to a second device, wherein the method comprises:
determining a first player that needs to be used by a first device when the second device initiates video projection, wherein the first player is a player that is supported by the first device and that is used in conjunction with a second player;
receiving a projection operation performed on the second player; and
sending a playing instruction, wherein the playing instruction instructs the first device to play a projected video by using the first player.

11. The method according to claim 10, wherein before sending the playing instruction, the method further comprises:
displaying a first interface, wherein the first interface comprises a first projection control of the first player; and
sending the playing instruction comprises:
sending the playing instruction in response to an operation performed on the first projection control.

12. The method according to claim 11, wherein the first interface further comprises a second projection control of a third player, wherein the third player is a player not supported by the first device, and/or the third player is not a player that is used in conjunction with the second player; and
user interface UI effect of the first projection control is different from UI effect of the second projection control.

13. The method according to any one of claims 10 to 12, wherein the method further comprises:
sending projection control data through a communication connection to the first device, wherein the projection control data comprises at least one type of the following data: bullet comment data, variable speed data, and definition data.

14. The method according to any one of claims 10 to 13, wherein determining the first player that needs to be used by the first device when the second device initiates video projection comprises:
receiving a discovery packet sent by the first device, wherein the discovery packet comprises information about a player supported by the first device; and
determining, from players supported by the first device, the player that is used in conjunction with the second player as the first player; or
sending an inquiry message, wherein the inquiry message is used to inquire the player that is supported by the first device and that is used in conjunction with the second player; and
receiving a response message sent by the first device, wherein the response message indicates the first player.

15. The method according to any one of claims 10 to 14, wherein the playing instruction comprises at least one piece of the following information: source information of the projected video, network connection information of the second device, a download address of the first player, an identifier of the first player, and an identifier of the second player; and/or
the source information of the projected video comprises at least one piece of the following information: a source type of the projected video, a playing address of the projected video, and a provider of the projected video; and/or
the network connection information of the second device comprises at least one piece of the following information: an address of the second player of the second device and a port number of the second player.

16. A device, wherein the device is a destination device during projection, and the destination device comprises:
a display;
one or more processors;
one or more memories; and
one or more programs, wherein the one or more programs are stored in the one or more memories, the one or more programs comprise instructions, and when the instructions are executed by the destination device, the destination device is enabled to perform the projection method according to any one of claims 1 to 9.

17. A device, wherein the device is a source device during projection, and the source device comprises:
a display;
one or more processors;
one or more memories; and
one or more programs, wherein the one or more programs are stored in the one or more memories, the one or more programs comprise instructions, and when the instructions are executed by the source device, the source device is enabled to perform the projection method according to any one of claims 10 to 15.

18. A readable storage medium, wherein the readable storage medium stores instructions, and when the instructions are run on a device, the device is enabled to perform the projection method according to any one of claims 1 to 9, or the device is enabled to perform the projection method according to any one of claims 10 to 15.

19. A program product comprising instructions, wherein when the program product runs on a device, the device is enabled to perform the projection method according to any one of claims 1 to 9, or the device is enabled to perform the projection method according to any one of claims 10 to 15.
